# EUROPÄISCHE PATENTSCHRIFT

(11) **EP 1 176 400 B1**
(45) Veröffentlichungstag und Bekanntmachung des Hinweises auf die Patenterteilung: **17.09.2003**
(21) Anmeldenummer: 01114964.8
(22) Anmeldetag: 20.06.2001
(51) Int. Cl.: G01D 7/04, B60Q 3/04, G01P 1/08

(54) **Anzeigegerät mit 2 Zeigern**
Indicator device with 2 pointers
Instrument d'indication avec 2 aiguilles

(30) Priorität: 24.07.2000 DE 10036037
(43) Veröffentlichungstag der Anmeldung: 30.01.2002
(73) Patentinhaber: Siemens Aktiengesellschaft, 80333 München (DE)
(72) Erfinder: Kallinke, Manfred, 65719 Hofheim (DE); Kasalowsky,Joachim, 63071 Offenbach (DE)

(56) Entgegenhaltungen:
- GB-A- 818 537

## Beschreibung

Die Erfindung betrifft ein Zeigerinstrument, insbesondere in einem Kraftfahrzeug, mit zwei jeweils durch einen eigenen Zeigerantrieb antreibbaren Zeigerwellen und zwei konzentrisch zueinander angeordneten, jeweils für einen Zeiger bestimmten Skalen.

Zeigerinstrumente der vorstehenden Art sind allgemein bekannt und gebräuchlich. Da die beiden Zeigerantriebe mit vertretbarem Aufwand und aus Platzgründen nur nebeneinander angeordnet werden können, verlaufen die Zeigerwellen meist mit einem gegenseitigen Abstand zueinander. Entsprechend bewegen sich die Zeigerenden über exzentrische Kreisbögen, so dass auch die Skalen exzentrisch zueinander angeordnet werden müssen. Die nicht konzentrische Anordnung von Skalen führt jedoch zu einer oftmals unerwünschten Vergrößerung des Anzeigeinstrumentes und bedingt eine gegenseitige Überlappung beider Skalen.

Von Uhren her ist es bekannt, eine Zeigerwelle als Hohlwelle auszubilden und in dieser Hohlwelle eine zweite Zeigerwelle anzuordnen. Das ermöglicht es, auf jeder der Zeigerwellen jeweils einen Zeiger vorzusehen, wobei die Zeiger sich über konzentrisch zueinander angeordnete Skalen zu schwenken vermögen.

Bei Zeigerinstrumenten für Kraftfahrzeuge ist es bei solchen ineinander verschachtelten Zeigerwellen auch schon bekannt, die als Hohlwelle ausgebildete Zeigerwelle über zwei Zahnräder von einem seitlich zu einem die innere Zeigerwelle antreibenden Zeigerantrieb anzutreiben. Dadurch kann das Zeigerinstrument mit zwei konzentrisch zueinander ausgerichteten, über konzentrische Skalen schwenkbaren und unabhängig voneinander antreibbaren Zeigern versehen werden. Die Ausbildung eines solchen Zahnradgetriebes ist jedoch aufwendig und vermindert die Dynamik einer Anzeige, weil bei ihr mit dem Zeigerantrieb zusätzlich zwei Zahnräder angetrieben werden müssen und relativ hohe Reibkräfte auftreten. Weiterhin ist eine Beleuchtung des Zeigers der Hohlwelle durch Einkoppeln von Licht in den Zeiger nicht möglich.

In der GB 818 537 A, die den gattungsbildenden Stand der Technik darstellt, ist ein Zeigerinstrument mit zwei zu einer Achse konzentrischen Skalen beschrieben. In der Achse befinden sich hintereinander eine erste und eine zweite Zeigerwelle, an denen jeweils ein Zeiger befestigt ist. Die erste Zeigerwelle ist identisch mit einer Antriebswelle des für sie vorgesehenen Antriebs, während die zweite, näher an der Skala angeordnete Zeigerwelle von einem seitlichen, eine Antriebswelle aufweisenden Antrieb angetrieben wird. Dazu befindet sich zwischen der Antriebswelle und der Zeigerwelle ein Zahnradgetriebe. Der Zeiger der ersten Zeigerwelle ist zweimal abgekröpft und umgeht somit ein Zahnrad des Zahnradgetriebes an der zweiten Zeigerwelle. Auch diese Anordnung hat nur eine geringe Dynamik.

Der Erfindung liegt das Problem zugrunde, ein Zeigerinstrument der eingangs genannten Art so auszubilden, dass mit möglichst geringem Aufwand zwei koaxiale Anzeigen möglich sind, welche beide eine möglichst geringe Trägheit und damit hohe Dynamik haben, und bei dem beide Zeiger durch Einkoppeln von Licht von der dem Betrachter abgewandten Seite her beleuchtbar sind.

Dieses Problem wird erfindungsgemäß dadurch gelöst, dass eine der Zeigerwellen exzentrisch zu den beiden konzentrischen Skalen angeordnet ist und der der exzentrischen Zeigerwelle zugeordnete Zeiger als optischer Zeiger ausgebildet ist, welcher einen radial auf der exzentrischen Zeigerwelle angeordneten, mit der Zeigerwelle verdrehbaren Lichtleiter und ein durch ein aus ortsfesten Lichtleitern gebildetes Lichtleitsystem hat, deren Lichtleiter jeweils mit geringem Abstand zur Bewegungsbahn des freien Endes des beweglichen Lichtleiters beginnend zu Anzeigesegmenten auf der zugeordneten, konzentrischen Skala führen.

Bei einem solchen Zeigerinstrument sind zwei koaxiale Anzeigen mit exzentrisch zueinander angeordneten Zeigerantrieben möglich, ohne dass hierzu zwei koaxiale Zeigerwellen und ein Getriebe zur Überbrückung des Abstandes des exzentrischen Zeigerantriebes von der ihm zugeordneten Zeigerwelle erforderlich sind. Deshalb lässt sich die gleiche Anzeigedynamik erreichen, wie bei einem Zeigerinstrument mit exzentrisch zueinander angeordneten Skalen. Weiterhin bereitet die Beleuchtung beider Zeiger durch Einkoppeln von Licht keine Schwierigkeiten. Da das erfindungsgemäße Zeigerinstrument gegenüber einem Zeigerinstrument mit exzentrischen Zeigerwellen und exzentrischen Skalen kein- zusätzliches Getriebe benötigt, um die Abstände zwischen den beiden Zeigerantrieben zu überbrücken, ist das erfindungsgemäße Zeigerinstrument kostengünstig herzustellen und bedingt keine Erhöhung der sich zur Herbeiführung einer Anzeige in Bewegung zu setzenden Massen.

Vorteilhaft ist es, wenn der Zeiger, welcher der koaxial zu den Skalen angeordneten Zeigerwelle zugeordnet ist, als mechanischer, auf der koaxialen Zeigerwelle befestigter Zeiger ausgebildet ist. Bei einem solchen Zeigerinstrument kann man für die primäre Anzeige einen üblichen Zeiger vorsehen und deshalb in gewohnter Weise auch Zwischenwerte zwischen den einzelnen Skalenstrichen ablesen. Hierzu im Gegensatz leuchten bei der optischen Anzeige nur nacheinander Leuchtsegmente auf, so dass die Anzeige in Sprüngen erfolgt. Dadurch eignet sich diese Anzeige für solche Größen, bei der ein weniger genaues Ablesen ausreichend ist.

Mit dem optischen Zeiger lassen sich unterschiedliche Effekte erreichen, wenn gemäß einer anderen Weiterbildung der Erfindung die ortsfesten Lichtleiter untereinander eine unterschiedliche Lichtleitfähigkeit haben. Hierdurch lassen sich unterschiedlich helle Anzeigesegmente oder gleich helle Anzeigesegmente trotz unterschiedlicher Entfernung von der Lichtquelle erreichen.

Wenn unterschiedlich von der Lichtquelle entfernte Anzeigesegmente gleich hell erscheinen sollen, dann kann man vorsehen, dass die Lichtleitfähigkeit der ortsfesten Lichtleiter mit zunehmender Länge der Lichtleiter höher gewählt ist.

Die Lichtleitfähigkeit könnte durch unterschiedliche Materialien für die ortsfesten Lichtleiter beeinflusst werden. Besonders einfach lässt sich die Lichtleitfähigkeit variieren, wenn die Lichtleitfähigkeit durch unterschiedliche Querschnitte der ortsfesten Lichtleiter festgelegt ist.

Das Zeigerinstrument ist besonders einfach gestaltet, wenn die ortsfesten Lichtleiter jeweils einen in etwa parallel zur Vorderseite des Zeigerinstrumentes verlaufenden Bereich aufweisen und an ihrer radial äußeren Seite mit einer Abwinklung zu jeweils einem Anzeigesegment der inneren Skala führen.

Je nach der jeweiligen Messgröße leuchten bei dem erfindungsgemäßen Zeigerinstrument unterschiedliche Skalenmarkierungen auf, wenn die Anzeigesegmente als Skalenmarkierungen ausgebildet sind.

Dabei kann man auch vorsehen, dass die Anzeigesegmente unterschiedlich gefärbt sind. Hierdurch kann man kritische Zustände, beispielsweise bei einer Füllstandsanzeige das Erreichen einer Restmenge, durch eine entsprechende Farbwahl verdeutlichen.

Eine andere Weiterbildung der Erfindung besteht darin, dass zumindest ein Anzeigesegment als Warnanzeigefeld ausgebildet ist. In einem solchen Fall könnte man durch entsprechende Ansteuerung des Zeigerantriebs den verdrehbaren Lichtleiter so verschwenken, dass er über den entsprechenden ortsfesten Lichtleiter ein gewünschtes Anzeigefeld beleuchtet und dadurch beispielsweise eine optische Warnung für einen zu geringen Öldruck oder für eine zu hohe Wassertemperatur des Motors erscheint.

Für die Anwendung in einem Kraftfahrzeug ist es besonders vorteilhaft, wenn der mechanische Zeiger Teil eines Tachometers eines Kraftfahrzeugs und der optische Zeiger Teil eines Drehzahlmessers eines Kraftfahrzeugs ist.

Die Erfindung lässt verschiedene Ausführungsformen zu. Eine davon ist schematisch in der Zeichnung dargestellt und wird nachfolgend beschrieben. Diese zeigt in
- Fig. 1: eine teilweise weggebrochen dargestellte Draufsicht auf ein Zeigerinstrument nach der Erfindung,
- Fig. 2: einen Längsschnitt durch das Anzeigeinstrument, gegenüber Figur 1 um 90° verdreht dargestellt.

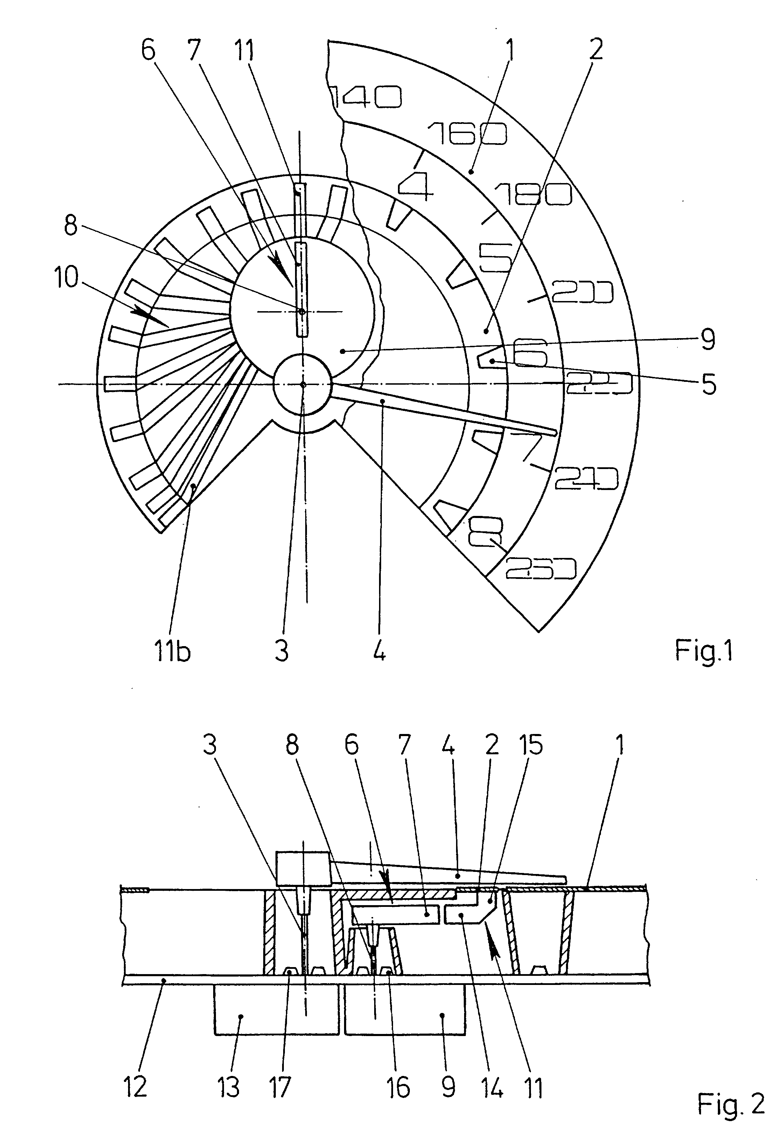

Wie die Figur 1 erkennen lässt, hat hier ein Anzeigeinstrument, das zum Einbau in ein nicht weiter dargestelltes Kraftfahrzeug vorgesehen ist, koaxial zueinander eine äußere Skala 1, bei der es sich um eine Tachometerskala handelt, und eine innere, als Drehzahlmesserskala ausgebildete Skala 2. Die äußere Skala 1 ist nur im rechten Teil der Figur 1 dargestellt, so dass im linken Bildteil unter ihr vorhandene Bauteile sichtbar sind. Koaxial zu beiden Skalen 1, 2 ist eine Zeigerwelle 3 angeordnet, die einen mechanischen Zeiger 4 trägt und bis zur äußeren Skala 1 reicht, um dort in gewohnter Weise die jeweilige Geschwindigkeit eines Fahrzeugs anzuzeigen.

Auf der inneren Skala 2 sind Anzeigesegmente 5 vorgesehen, welche sich einzeln beleuchten lassen, so dass bei einer bestimmten Motordrehzahl jeweils ein bestimmtes Anzeigesegment 5 aufleuchtet. Zur Beleuchtung des jeweiligen Anzeigesegmentes 5 dient ein optischer Zeiger 6. Dieser hat einen verdrehbaren Lichtleiter 7, der auf einer exzentrisch zur Zeigerwelle 3 angeordneten Zeigerwelle 8 eines Zeigerantriebs 9 angeordnet ist. Zu dem optischen Zeiger 6 gehört weiterhin ein Lichtleitsystem 10, welches aus einzelnen, ortsfesten Lichtleitern 11 gebildet ist. Diese Lichtleiter 11 haben jeweils eine unterschiedliche Länge. Zu erkennen ist, dass beispielsweise ein Lichtleiter 11b eine mehrfache Länge des Lichtleiters 11 hat. Alle Lichtleiter 11, 11b beginnen jeweils mit geringem Abstand zur Bewegungsbahn des freien Endes des beweglichen Lichtleiters 7 und führen zu den im rechten Bildteil gezeigten Anzeigesegmenten 5 auf der inneren Skala 2.

Die Figur 2 zeigt unter einer Leiterplatte 12 einen Zeigerantrieb 13, der die koaxiale Zeigerwelle 3 mit dem mechanischen Zeiger 4 anzutreiben vermag. Seitlich neben dem Zeigerantrieb 13 ist der Zeigerantrieb 9 mit der Zeigerwelle 8 und dem verdrehbaren Lichtleiter 7 zu sehen. Bei den Zeigerantrieben 9, 13 handelt es sich üblicherweise um Schrittmotoren. Ebenfalls erkennt man einen der ortsfesten Lichtleiter 11. Dieser hat einen in etwa parallel zur Vorderseite des Zeigerinstrumentes verlaufenden Bereich 14 und an seiner radial äußeren Seite eine Abwinklung 15, die zu der inneren Skala 2 führt. Zur Beleuchtung der in Figur 1 gezeigten Anzeigesegmente 5 der inneren Skala 2 dienen Leuchtdioden 16, über die zunächst Licht in den verdrehbaren Lichtleiter 7 eingekoppelt wird, was anschließend in den jeweiligen ortsfesten Lichtleiter 11 gelangt, der mit dem äußeren Ende des verdrehbaren Lichtleiters 7 fluchtet.

Der mechanische Zeiger 4 wird von Leuchtdioden 17 beleuchtet, die Licht in ihn einzukoppeln vermögen.

Bei den Anzeigesegmenten 5 kann es sich statt um Markierungen auf der Skala 2 auch um Anzeigefelder handeln, welche bei Bedarf durch den verdrehbaren Lichtleiter 7 und einen der ortsfesten Lichtleiter 11 beleuchtbar sind.

## Patentansprüche

1. Zeigerinstrument, insbesondere in einem Kraftfahrzeug, mit zwei jeweils durch einen eigenen Zeigerantrieb (9, 13) antreibbaren Zeigerwellen (8, 3) und zwei konzentrisch zueinander angeordneten, jeweils für einen Zeiger (6,4) bestimmten Skalen (2, 1), **dadurch gekennzeichnet, dass** eine der Zeigerwellen (8) exzentrisch zu den beiden konzentrischen Skalen (1, 2) angeordnet ist und der der exzentrischen Zeigerwelle (8) zugeordnete Zeiger als optischer Zeiger (6) ausgebildet ist, welcher einen radial auf der exzentrischen Zeigerwelle (8) angeordneten, mit der Zeigerwelle (8) verdrehbaren Lichtleiter (7) und ein durch ein aus ortsfesten Lichtleitern (11, 11a) gebildetes Lichtleitsystem (10) hat, deren Lichtleiter (11, 11a) jeweils mit geringem Abstand zur Bewegungsbahn des freien Endes des verdrehbaren Lichtleiters (7) beginnend zu Anzeigesegmenten (5) auf der zugeordneten, konzentrischen Skala (2) führen.

2. Zeigerinstrument nach Anspruch 1, **dadurch gekennzeichnet, dass** der Zeiger (4), welcher der koaxial zu den Skalen (1, 2) angeordneten Zeigerwelle (3) zugeordnet ist, als mechanischer, auf der koaxialen Zeigerwelle (3) befestigter Zeiger (4) ausgebildet ist.

3. Zeigerinstrument nach den Ansprüchen 1 oder 2, **dadurch gekennzeichnet, dass** die ortsfesten Lichtleiter (11, 11a) untereinander eine unterschiedliche Lichtleitfähigkeit haben.

4. Zeigerinstrument nach Anspruch 3, **dadurch gekennzeichnet, dass** die Lichtleitfähigkeit der ortsfesten Lichtleiter (11, 11a) mit zunehmender Länge der Lichtleiter (11, 11a) höher gewählt ist.

5. Zeigerinstrument nach den Ansprüchen 3 oder 4, **dadurch gekennzeichnet, dass** die Lichtleitfähigkeit durch unterschiedliche Querschnitte der ortsfesten Lichtleiter (11, 11a) festgelegt ist.

6. Zeigerinstrument nach zumindest einem der vorangehenden Ansprüche, **dadurch gekennzeichnet, dass** die ortsfesten Lichtleiter (11, 11a) jeweils einen in etwa parallel zur Vorderseite des Zeigerinstrumentes verlaufenden Bereich (14) aufweisen und an ihrer radial äußeren Seite mit einer Abwinklung (15) zu jeweils einem Anzeigesegment (5) der inneren Skala (2) führen.

7. Zeigerinstrument nach Anspruch 6, **dadurch gekennzeichnet, dass** die Anzeigesegmente (5) als Skalenmarkierungen ausgebildet sind.

8. Zeigerinstrument nach Anspruch 6 oder 7, **dadurch gekennzeichnet, dass** die Anzeigesegmente (5) unterschiedlich gefärbt sind.

9. Zeigerinstrument nach zumindest einem der Ansprüche 6 bis 8, **dadurch gekennzeichnet, dass** zumindest ein Anzeigesegmente (5) als Warnanzeigefeld ausgebildet ist.

10. Zeigerinstrument nach zumindest einem der vorangehenden Ansprüche, **dadurch gekennzeichnet, dass** der mechanische Zeiger (4) Teil eines Tachometers eines Kraftfahrzeugs und der optische Zeiger (6) Teil eines Drehzahlmessers eines Kraftfahrzeugs ist.

## Claims

1. Pointer instrument, in particular in a motor vehicle, having two pointer shafts (8, 3) which can each be driven by a separate pointer drive (9, 13), and two scales (2, 1) which are arranged concentrically with respect to one another and are each intended for one pointer (6, 4), **characterized in that** one of the pointer shafts (8) is arranged eccentrically with respect to the two concentric scales (1, 2), and the pointer assigned to the eccentric pointer shaft (8) is embodied as an optical pointer (6) which has a lightguide (7) which is arranged radially on the eccentric pointer shaft (8) and can rotate with the pointer shaft (8), and a lightguide system (10) which is formed by a from fixed lightguides (11, 11a) the lightguides (11, 11a) of which each start at a small distance from the movement path of the free end of the rotatable lightguide (7) and lead to display segments (5) on the assigned, concentric scale (2).

2. Pointer instrument according to Claim 1, **characterized in that** the pointer (4) which is assigned to the pointer shaft (3) which is arranged coaxially with respect to the scales (1, 2) is embodied as a mechanical pointer (4) which is mounted on the coaxial pointer shaft (3).

3. Pointer instrument according to Claim 1 or 2, **characterized in that** the fixed lightguides (11, 11a) have different light transmitting capacities from one another.

4. Pointer instrument according to Claim 3, **characterized in that** the light transmitting capacity of the fixed lightguides (11, 11a) is selected such that it is higher as the length of the lightguides (11, 11a) increases.

5. Pointer instrument according to Claim 3 or 4, **characterized in that** the light transmitting capacity is determined by different cross sections of the fixed lightguides (11, 11a).

6. Pointer instrument according to at least one of the preceding claims, **characterized in that** the fixed lightguides (11, 11a) each have a region (14) which extends approximately parallel to the front side of the pointer instrument, and lead, with a bent portion (15) on their radially outer side, to one display segment (5) each of the inner scale (2).

7. Pointer instrument according to Claim 6, **characterized in that** the display segments (5) are embodied as scale markings.

8. Pointer instrument according to Claim 6 or 7, **characterized in that** the display segments (5) are coloured differently.

9. Pointer instrument according to one of Claims 6 to 8, **characterized in that** at least one display segment (5) is embodied as a warning display field.

10. Pointer instrument according to at least one of the preceding claims, **characterized in that** the mechanical pointer (4) is part of a tachometer of a motor vehicle, and the optical pointer (6) is part of a revolution counter of a motor vehicle.

## Revendications

1. Instrument à aiguilles, en particulier pour un véhicule automobile, comprenant deux arbres d'aiguilles (8, 3) pouvant être entraînés chacun par son propre entraînement d'aiguille, et deux échelles (2, 1) disposées concentriquement l'une à l'autre, destinées chacune à une aiguille (6, 4), **caractérisé en ce qu'**un des arbres d'aiguilles (8) est disposé excentriquement par rapport aux deux échelles concentriques (1, 2) et que l'aiguille associée à l'arbre d'aiguille excentrique (8) est constituée par une aiguille optique (6) qui comprend un guide de lumière (7) disposé radialement sur l'arbre d'aiguille excentrique (8), et qui toume avec l'arbre d'aiguille (8), et un système de guidage de lumière (10) constitué par des guides de lumière fixes (11, 11a) dont les guides de lumière (11, 11a) conduisent, chacun en commençant à petite distance de la trajectoire de l'extrémité libre du guide de lumière tournant (7), à des segments d'affichage (5) situés sur l'échelle concentrique (2) correspondante.

2. Instrument d'affichage selon la revendication 1, **caractérisé en ce que** l'aiguille (4) qui est associée à l'arbre d'aiguille (3) disposé coaxialement aux échelles (1, 2) est constituée par une aiguille mécanique (4) fixée sur l'arbre d'aiguille coaxial (3).

3. Instrument d'affichage selon les revendications 1 ou 2, **caractérisé en ce que** les guides de lumière fixes (11, 11a) ont des conductibilités optiques différentes.

4. Instrument d'affichage selon la revendication 3, **caractérisé en ce que** la conductibilité optique des guides de lumière fixes (11, 11a) est choisie pour croître avec l'accroissement de la longueur des guides de lumière (11, 11a).

5. Instrument d'affichage selon les revendications 3 ou 4, **caractérisé en ce que** la conductibilité optique est déterminée par des sections différentes des guides de lumière fixes (11, 11a).

6. Instrument d'affichage selon au moins une des revendications précédentes, **caractérisé en ce que** les guides de lumière fixes (11, 11a) présentent chacun une zone (14) qui s'étend à peu près parallèlement à la face avant de l'instrument à aiguilles et conduisent chacun, le long de leur côté radialement extérieur muni d'un coude (15), à un segment d'affichage (5) de l'échelle intérieure (2).

7. Instrument d'affichage selon la revendication 6, **caractérisé en ce que** les segments d'affichage (5) sont constitués par des marquages des échelles.

8. Instrument d'affichage selon la revendication 6 ou 7, **caractérisé en ce que** les segments d'affichage (5) sont colorés différemment.

9. Instrument d'affichage selon au moins une des revendications 6 à 8, **caractérisé en ce qu'**au moins un segment d'affichage (5) est constitué par un segment d'alarme.

10. Instrument d'affichage selon au moins une des revendications précédentes, **caractérisé en ce que** l'aiguille mécanique (4) fait partie d'un tachymètre d'un véhicule automobile et que l'aiguille optique (6) fait partie d'un compte-tours d'un véhicule automobile.
